# EUROPÄISCHE PATENTSCHRIFT

(11) **EP 2 470 808 B1**
(45) Veröffentlichungstag und Bekanntmachung des Hinweises auf die Patenterteilung: **27.11.2013**
(21) Anmeldenummer: 10772958.4
(22) Anmeldetag: 30.08.2010
(51) Int. Cl.: F16D 13/38, F16D 21/06, F16D 25/0638, F16D 25/10

(54) **DOPPELKUPPLUNGSANORDNUNG FÜR EIN GETRIEBE MIT ZWEI EINGANGSWELLEN**
DUAL CLUTCH ASSEMBLY FOR A TRANSMISSION HAVING TWO INPUT SHAFTS
SYSTÈME DE DOUBLE EMBRAYAGE POUR UNE BOÎTE DE VITESSES MUNIE DE DEUX ARBRES D'ENTRÉE

(30) Priorität: 28.08.2009 DE 102009039223
(43) Veröffentlichungstag der Anmeldung: 04.07.2012
(73) Patentinhaber: Getrag Ford Transmissions GmbH, 50735 Köln (DE); GETRAG Getriebe- und Zahnradfabrik Hermann Hagenmeyer GmbH & Cie KG, 74199 Untergruppenbach (DE)
(72) Erfinder: ABSENGER, Marc, 42285 Wuppertal (DE); LAUSCHER, Friedel, 52372 Kreuzau-Drove (DE); DOELLING, Matthias, 51429 Bergisch-Gradbach (DE); HEGERATH, Andreas, 50126 Bergheim (DE); GREMPLINI, Hansi, 74379 Ingersheim (DE)
(74) Vertreter: Albiger, Jonas
(86) Internationale Anmeldenummer: PCT/EP2010/005309
(87) Internationale Veröffentlichungsnummer: WO 2011/023407

(56) Entgegenhaltungen:
- EP-A2- 2 182 234
- WO-A1-03/006840
- WO-A1-2006/048179
- DE-A1-102009 006 649

## Beschreibung

Die Erfindung betrifft eine Doppelkupplungsanordnung für ein eine erste Eingangswelle und eine zweite Eingangswelle aufweisendes Getriebe gemäß dem Oberbegriff des Anspruchs 1.

Die WO 20091021582 A1 offenbart eine Doppelkupplungsanordnung mit einem mit einem Antrieb drehfest verbindbaren Kupplungsgehäuse in Form eines Kupplungstopfes, mit einer ersten Reibkupplung, welche ein Drehmoment zwischen Kupplungsgehäuse und erster Eingangswelle überträgt, wenn sie mit einer Druckkraft beaufschlagt wird; und mit einer zweiten Reibkupplung, welche ein Drehmoment zwischen Kupplungsgehäuse und zweiter Eingangswelle überträgt, wenn sie mit einer Druckkraft beaufschlagt wird. Die erste Reibkupplung mit einem Lamellenpaket bestehend aus Außenlamellen und Innenlamellen ist dabei radial außen angeordnet, während die zweite Reibkupplung, ebenfalls mit Außenlamellen und Innenlamellen ausgestattet, radial innen angeordnet ist.

Mit einer ersten Betätigungseinheit, welche einen axial verschiebbaren und mit dem Kupplungsgehäuse rotierenden Kolben aufweist, lässt sich eine auf die erste Reibkupplung wirkende Druckkraft aufbauen, damit mit der ersten Reibkupplung ein Drehmoment zwischen dem Kupplungsgehäuse, also dem Antrieb, und der ersten Eingangswelle übertragen werden kann. Analog ist eine zweite Betätigungseinheit für die zweite Reibkupplung vorgesehen.

Die Doppelkupplungsanordnung kann für ein automatisiertes Doppelkupplungsgetriebe in einem Kraftfahrzeug eingesetzt werden. Ein wichtiges Kriterium beim Fahrzeugbau ist der Raumbedarf eines solchen Doppelkupplungsgetriebes. Bei einem Kraftfahrzeug mit quer eingebautem Motor und entsprechend quer eingebautem Getriebe sollte die axiale Bauhöhe des Getriebes und somit auch der Doppelkupplungsanordnung möglichst klein sein.

Bei der Doppelkupplungsanordnung der WO 2009/021582 A1 sind die erste Betätigungseinheit und die zweite Betätigungseinheit an einer vom Antrieb abgewandten Seite der beiden radial verschachtelten Reibkupplungen angeordnet, wobei die Betätigungseinheiten mit ihren jeweiligen Kolben jeweils von dieser Seite aus in axialer Richtung gegen die entsprechenden Lamellenpakete der Reibkupplungen drücken. Die Anordnung der beiden Betätigungseinheiten an einer Seite der Reibkupplungen führt jedoch zu einem aufwändigen und komplizierten Aufbau der Betätigungseinheiten mit einer Vielzahl unterschiedlicher Bauteile.

Aus der EP 1 195 537 B1 eine Doppelkupplungsanordnung für ein Doppelkupplungsgetriebe bekannt, bei der eine erste Reibkupplung und eine zweite jedoch nicht radial verschachtelt, sondern axial nebeneinander angeordnet sind. Bedingt durch die axial neben einander angeordneten Reibkupplungen sind der Reduzierung der axialen Baulänge des Getriebes jedoch Grenzen gesetzt.

Zudem ist aus der WO 2006/048179A1 eine Doppelkupplungsanordnung für ein Doppelkupplungsgetriebe bekannt welche einfacher aufgebaut ist und eine geringere axiale Baulänge aufweist.

Der Erfindung liegt daher die Aufgabe zu Grunde, eine solche Doppelkupplungsanordnung für ein Getriebe mit zwei Eingangswellen weiterzuentwickeln, um weitere Bauteile der Doppelkupplungsanordnung oder des Getriebes in einfacher Weise mit Öl zu versorgen.

Die der Erfindung zu Grunde liegende Aufgabe wird mit der Merkmalskombination gemäß Anspruch 1 gelöst. Bevorzugte Ausführungsbeispiele können den Unteransprüchen entnommen werden.

Gemäß Anspruch 1 wirken die Druckkraft des Kolbens der ersten Betätigungseinheit und die Druckkraft des Kolbens der zweiten Betätigungseinheit in axial entgegen gesetzten Richtungen. Vorzugsweise wirkt die Druckkraft des Kolbens der ersten Betätigungseinheit für die erste, radial außen liegende Reibkupplung von einer Getriebeseite aus in Richtung Antrieb, während der Kolben der zweiten Betätigungseinheit für die zweite, radial innen liegenden Reibkupplung vom Antrieb in Richtung Getriebeseite.

Ein Kupplungssupport ist vorgesehen, auf dem die Kupplungsnabe drehbar gelagert ist und der wenigstens eine Ölbohrung und wenigstens einen Stopfen zum Verschluss einer Ölbohrung aufweist, wobei der Stopfen eine definierte Leckageöffnung aufweist. Durch diese definierte Leckageöffnung lassen sich zusätzlich gezielt weitere Bauteile der Doppelkupplungsanordnung oder des Getriebes mit Öl versorgen.

Die erste Reibkupplung kann ein Lamellenpaket mit Außenlamellen und Innenlamellen aufweisen. Die zweite Reibkupplung kann ebenfalls ein Lamellenpaket mit Außenlamellen und Innenlamellen aufweisen, wobei vorzugsweise die Außenlamellen der ersten Reibkupplung und die Innenlamellen der zweiten Reibkupplung drehfest mit dem Kupplungsgehäuse verbunden sind. Bei der radial verschachtelten Anordnung der beiden Reibkupplungen ist ein Innendurchmesser der Innenlamellen der äußeren Reibkupplung größer als ein Außendurchmesser der Außenlamellen der inneren Reibkupplung. Die beiden Lamellenpakete liegen somit in einer gleichen Ebene, welche sich senkrecht zu den Eingangswellen erstreckt.

In einem bevorzugten Ausführungsbeispiel sind die Innenlamellen der äußeren Reibkupplung mit der ersten Eingangswelle drehfest verbunden, wobei diese als Vollwelle ausgebildet ist. Die Außenlamellen der inneren Reibkupplung sind bevorzugt mit der zweiten Eingangswelle verbunden, welche eine Hohlwelle sein kann. Vollwelle und Hohlwelle sind bevorzugt koaxial angeordnet.

Die erste Betätigungseinheit und die zweite Betätigungseinheit sind vorzugsweise spiegelsymmetrisch oder vorzugsweise im Wesentlichen spiegelsymmetrisch zueinander aufgebaut. In radialer Richtung gesehen können die im Wesentlichen spiegelsymmetrisch angeordneten Betätigungseinheiten radial gesehen innerhalb der zweiten Reibkupplung angeordnet sein.

Die Spiegelsymmetrie erfordert die Verwendung von identischen oder sehr ähnlichen Bauteilen für die Betätigungseinheiten. Auf diese Bauteile wird nun zunächst nur im Bezug auf die erste Betätigungseinheit eingegangen. Die Ausführungen gelten aber sinngemäß auch für die Bauteile der zweiten Betätigungseinheit und zwar auch unabhängig von einer Spiegelsymmetrie. So kann es sein, dass ein Bauteil der ersten Betätigungseinheit und/oder ein entsprechendes Bauteil der zweiten Betätigungseinheit Merkmale aufweist, die im Folgenden nur bezüglich der ersten Betätigungseinheit beschreiben werden.

Beim Ausführungsbeispiel, bei dem die Reibkupplungen jeweils Lamellenpakete mit Innenlamellen und Außenlamellen umfassen, bedeutet das Merkmal "radial innerhalb der zweiten Reibkupplung", dass sowohl ein Druckraum als auch eine Ausgleichskammer der ersten Betätigungseinheit (und auch der zweiten Betätigungseinheit) mit den notwendigen Abdichtungen einen Außendurchmesser aufweisen, der kleiner ist als der Innendurchmesser der Innenlamellen der inneren Reibkupplung. Auch soll das Merkmal "radial innerhalb der zweiten Reibkupplung" bevorzugt eine radiale Verschachtelung einschließen, so dass die Reibkupplungen und die Betätigungseinheiten nicht axial zueinander versetzt angeordnet sind.

Eine bevorzugte Möglichkeit besteht darin, dass der Kolben der ersten Betätigungseinheit mit einem radial innen liegenden Ende verschiebbar an einer mit dem Kupplungsgehäuse rotierenden Kupplungsnabe anliegt. Da auch der Kolben mit dem Kupplungsgehäuse rotiert bzw. drehfest verbunden ist, gibt es zwischen Kolben und Kupplungsnabe kein Drehzahlunterschied, was die Abdichtung zwischen Kolben und Kupplungsnabe einfacher gestaltet.

In einem bevorzugten Ausführungsbeispiel weist der Kolben der ersten Betätigungseinrichtung einen radialen Kolbenabschnitt und einen axialen oder zylindrischen Kolbenabschnitt auf, wobei zwischen einer Innenseite des zylindrischen Kolbenabschnitt und einer Außenseite einer Druckraumbegrenzung der ersten Betätigungseinheit eine Dichtung zur Abdichtung eines Druckraums vorgesehen ist. Der Kolben ist somit nicht in der Druckraumbegrenzung geführt, sondern umgreift Letztgenannte mit seinem zylindrischen Kolbenabschnitt. Die Dichtung kann an der Außenseite der Druckraumbegrenzung befestigt sein (beispielsweise durch Anvulkanisieren), sodass beim Verschieben des Kolbens der zylindrische Kolbenabschnitt an der feststehenden Dichtung entlang gleitet. Es ist auch möglich, die Dichtung an der Innenseite des zylindrischen Kolbenabschnitts zu befestigen oder auch Teildichtungen sowohl an der Druckraunbegrenzung und dem zylindrischen Kolbenabschnitt vorzusehen. Um eine möglichst gute Verbindung zwischen Bauteil und anvulkanisierter Dichtung zu erhalten, können Bohrungen, Durchgangslöcher oder dergleichen im Bauteil vorgesehen sein, in welche dann ein Tei der Dichtung greift.

Mit einem inneren Ende, welches bevorzugt mit einer Dichtung versehen ist, kann die Druckraumbegrenzung ebenfalls an der Kupplungsnabe anliegen. Druckraumbegrenzung und Kupplungsnabe weisen bevorzugt ebenfalls keine Differenzdrehzahl auf.

Ein Kupplungssteg kann die Kupplungsnabe mit einem Innenlamellenträger der zweiten Reibkupplung verbinden, wobei der Kupplungssteg einen radialen Stegabschnitt und wenigstens einen zylindrischen Stegabschnitt aufweist. Der radiale Stegabschnitt überbrückt dabei den radialen Abstand zwischen Kupplungsnabe und dem Innenlamellenträger der innen liegenden Reibkupplung. Der zylindrische Stegabschnitt dient der drehfesten Verbindung zwischen dem Innenlamellenträger der innen liegenden Reibkupplung und der Kupplungsnabe. Aufgrund des Kupplungsstegs dreht sich die Kupplungsnabe mit dem Kupplungsgehäuse. Zudem kann die Kupplungsnabe, wie später noch näher ausgeführt wird, einen Teil des Drehmomentes des Antriebs auf die Kupplungsnabe übertragen, wenn die Kupplungsnabe zum Antrieb eines (Hilfs- )Aggregats dient.

In einem bevorzugten Ausführungsbeispiel ist zwischen einer Innenseite des zylindrischen Stegabschnitts des Kupplungsstegs und einer Außenseite des zylindrischen Kolbenabschnitts des Kolbens der ersten Betätigungseinrichtung eine Dichtung zur Abdichtung einer Ausgleichskammer der ersten Betätigungseinheit vorgesehen. Dem Kupplungssteg kommt somit die weitere Aufgabe zu, gemeinsam mit dem Kolben die Ausgleichskammer der ersten Betätigungseinheit zu begrenzen. Die Ausgleichskammer sorgt dafür, eine rückseitige Fläche des Kolbens mit einem durch Fliehkraft bedingten Öldruck zu beaufschlagen, sodass ein Druckanstieg im Druckraum, welcher auf Fliehkrafteinflüsse zurückzuführen ist, möglichst vollständig kompensiert wird. In diesem Ausführungsbeispiel sind zusätzliche Trennbleche oder dergleichen zur Bildung der Ausgleichskammer nicht notwendig, was den Aufbau der Betätigungseinheit vereinfacht.

Die Dichtung zwischen der Außenseite des zylindrischen Kolbenabschnitts und der Innenseite des zylindrischen Stegabschnitts kann an dem Kolbenabschnitt anvulkanisiert sein, sodass der zylindrische Stegabschnitt relativ zur Dichtung verschoben wird, wenn die erste Betätigungseinheit betätigt, der Kolben axial verschoben und die erste, außen liegende Reibkupplung eine Drehmomentkapazität aufbaut.

Der Kupplungssteg kann eine Weiche umfassen, die einen Fluidstrom in einen Teilstrom zur Kühlung wenigstens einer der Reibkupplungen und in wenigstens einen Teilstrom zur Ausgleichkammer der ersten Betätigungseinheit aufteilt. Die Weiche, die bevorzugt als ein Sinterring direkt an der Kupplungsnabe anliegt, weist dabei einen Eingang auf, in den die Kühl- und Hydraulikflüssigkeit (bevorzugt Öl) von der Kupplungsnabe in die Weiche eintritt. Die Weiche verbindet dabei den Eingang mit einem ersten Ausgang zur Ausgleichskammer der ersten Betätigungseinheit und zu einem Kühlausgang, mit der die wenigstens eine Reibkupplung mit Öl versorgt wird.

Vorzugsweise ist die Weiche bzw. der Sinterring spiegelsymmetrisch aufgebaut, wobei der Kühlausgang als ein mittlerer Ausgang ausgebildet ist, welche sich in radialer Richtung erstreckt. Der erste Ausgang für die Versorgung von Öl für die Ausgleichskammer der ersten Betätigungseinheit entspricht dabei in Form und Gestalt unter Berücksichtigung der Spiegelsymmetrie einem zweiten Ausgang für die Versorgung von Öl für eine Ausgleichskammer der zweiten Betätigungseinheit

Bevorzugt besteht der Kupplungssteg aus zwei Steghälften, die jeweils einen radialen Abschnitt und einen zylindrischen Abschnitt aufweisen. Zwischen den radialen Abschnitten der Steghälften kann ein sich in radialer Richtung erstreckender Hohlraum vorgesehen sein, der einen Kanal von dem Kühlausgang oder mittleren Ausgang der Weiche zum Innenlamellenträger ausbildet. Durch diesen Kanal gelangt Öl zur zweiten Reibkupplung. Durch entsprechende Radialöffnungen kann sichergestellt werden, dass das Öl weiter zur außen liegenden Reibkupplung gelangt.

Zu betonen ist, dass die Führung des Teilstroms zur Kühlung wenigstens einer Reibkupplung durch den Hohlraum des Kupplungsstegs nicht notwendigerweise mit dem oben beschriebenen Merkmal der zwei Steghälften des Kupplungsstegs verbunden ist. Beispielsweise könnte der Teilstrom auch nur durch eine oder mehrere Radialbohrungen im radialen Stegabschnitt des Kupplungsstegs geführt sein.

In einem bevorzugten Ausführungsbeispiel wird die Druckkraft des Kolbens der ersten Betätigungseinheit durch einen Andruckkörper auf das Lamellenpaket der ersten Reibkupplung übertragen. Der Andruckkörper oder auch Andruckring überbrückt dabei in erster Linie den radialen Abstand zwischen dem Lamellenpaket der ersten, außen liegenden Kupplung und dem Kolben der ersten Betätigungseinheit, der bevorzugt an der Kupplungsnabe axial verschiebbar anliegt, also radial wesentlich weiter innen liegt. Der Andruckkörper ist bevorzugt an dem Kolben einstückig angeformt, sodass es beispielsweise möglich ist, Kolben und Andruckstück aus einem Blech über ein Tiefziehprozess oder Umformprozess herzustellen.

Vorzugsweise sind der Kolben der ersten Betätigungseinheit und ein Kolben der zweiten Betätigungseinheit baugleich. Die Kolben der Betätigungseinheiten sollen dabei auch dann als baugleich gelten, wenn jeweils an dem Kolben ein unterschiedlicher Andruckkörper einstückig angeformt ist. Da die zweite Reibkupplung radial gesehen weiter innen liegt, muss der Andruckkörper für das Lamellenpaket er zweiten Reibkupplung einen kürzeren radialen Abstand zum Kolben der zweiten Betätigungseinheit überbrücken als der Andruckkörper der ersten Betätigungseinheit.

Die Druckraumbegrenzung der ersten Betätigungseinheit und eine Druckraumbegrenzung der zweiten Betätigungseinheit können baugleich ausgeführt sein. Zusätzlich können die Ausgleichskammer der ersten Betätigungseinheit und die Ausgleichskammer der zweiten Betätigungseinheit gleich ausgebildet sein, sodass die beiden Betätigungseinheiten, abgesehen von den unterschiedlichen Andruckskörpern und der Spiegelsymmetrie, identisch aufgebaut sind. Die obigen Ausführungen, die sich auf die erste Betätigungseinheit beziehen, gelten somit sinngemäß auch für die einzelnen Bauteile der zweiten Betätigungseinheit.

Der gleiche Aufbau der Betätigungseinheiten reduziert die Anzahl unterschiedlicher Teile in der Doppelkupplungsanordnung. Dies führt zu einem besonders einfachen Aufbau der Doppelkupplungsanordnung.

Die Kupplungsnabe kann wenigstens eine Ölbohrung aufweisen, welche in eine Ölnut mit abgerundeten oder gefasten Nutwänden mündet. Mögliche Grate bei der Herstellung der Ölbohrung stehen dann nicht über eine äußere Mantelfläche der Kupplungsnabe hervor, sodass Dichtungen, die entlang der Mantelfläche der Kupplungsnabe bei der Montage der Doppelkupplungsanordnung über die Ölbohrungen hinweg geschoben werden müssen, nicht durch dies Grate beschädigt werden können. Es versteht sich, dass der Einsatz dieser bevorzugte Kupplungsnabe von der besonderen Ausgestaltung der erfindungsgemäßen Doppelkupplungsanordnung losgelöst ist.

Die Kupplungsnabe kann an einem dem Antrieb abgewandten Ende einen Absatz zur drehfesten Aufnahme eines Pumpenrads aufweisen. Das Pumpenrad treibt eine Pumpe für die Bereitstellung eines notwendigen Betriebsdrucks für die Ölversorgung der Doppelkupplungsanordnung oder des gesamten Getriebes. Das entsprechende Drehmoment für das Pumpenrad wird von dem Antrieb über das Kupplungsgehäuse auf die Kupplungsnabe übertragen.

Vorzugsweise wird das Drehmoment vom Kupplungsgehäuse auf das mit der Kupplungsnabe drehfest verbundene Pumpenrad über den Kupplungssteg übertragen. Der Kupplungssteg ist vorzugsweise in axialer Richtung zwischen den Druckräumen der ersten und zweiten Betätigungseinheit vorgesehen. Diese Ausführung erlaubt es, dass die Druckraumbegrenzung der ersten Betätigungseinheit und das Pumpenrad in axialer Richtung aneinander anliegen, dh., dass kein Bauteil zur Drehmomentübertragung axial zwischen Druckraumbegrenzung und Pumpenrad vorgesehen ist.

Alternativ oder zusätzlich ist es jedoch auch möglich, dass Drehmoment für das Pumpenrad durch ein entsprechendes Bauteil zu übertragen, welches in axialer Richtung zwischen Pumpenrad und Druckraumbegrenzung der ersten Betätigungseinheit, also der vom Antrieb weiter entfernt angeordneten Betätigungseinheit, angeordnet sein kann.

Anhand der in der Zeichnung dargestellten Ausführungsbeispiele wird die Erfindung näher erläutert. Es zeigen:
- Figur 1: ein erstes Ausführungsbeispiel der Erfindung;
- Figur 2: einen Kupplungssupport;
- Figur 3: eine Druckraumbegrenzung;
- Figur 4: einen Kupplungssteg;
- Figur 5: einen Kupplungssupport
- Figur 6: ein weiteres Ausführungsbeispiel der Erfindung;
- Figur 7: ein weiteres Ausführungsbeispiel der Erfindung;
- Figur 8: ein weiteres Ausführungsbeispiel der Erfindung;
- Figur 9: ein weiteres Ausführungsbeispiel der Erfindung;
- Figur 10: ein weiteres Ausführungsbeispiel der Erfindung;
- Figur 11: ein weiteres Ausführungsbeispiel der Erfindung;
- Figur 12: ein weiteres Ausführungsbeispiel der Erfindung; und
- Figur 13: ein weiteres Ausführungsbeispiel der Erfindung.

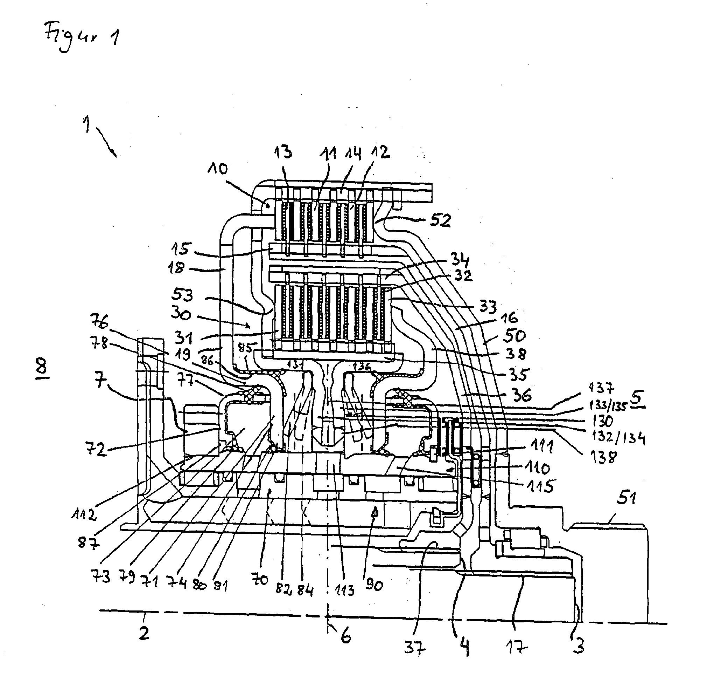

Figur 1 zeigt im Längsschnitt eine Hälfte einer Doppelkupplungsanordnung, welche in ihrer Gesamtheit mit 1 bezeichnet wird. Die Doppelkupplungsanordnung 1 ist um eine Rotationsachse 2 im Wesentlichen rotationssymmetrisch aufgebaut.

Die Doppelkupplungsanordnung 1 ist für ein Getriebe ausgelegt, von dem in Figur 1 nur ansatzweise eine erste Eingangswelle 3 und eine zweite Eingangswelle 4 dargestellt ist. Die Eingangswellen 3, 4 sind koaxial zur Rotationsachse 2 angeordnet, wobei die zweite Eingangswelle 4 als Hohlwelle ausgebildet ist. Das Getriebe kann ein Doppelkupplungsgetriebe in einem Kraftfahrzeug sein, welches ein erstes und ein zweites Teilgetriebe aufweist. Zwischen den Teilgetrieben, denen jeweils eine Eingangswelle zugeordnet ist, und einem nicht dargestellten Antrieb (Motor) ist die Doppelkupplungsanordnung 1 geschaltet. Durch die Doppelkupplungsanordnung 1 ist es möglich, Drehmoment des Antriebs auf die erste Eingangswelle 3 und/oder die zweite Eingangswelle 4 zu übertragen.

Die Doppelkupplungsanordnung 1 weist eine erste Reibkupplung 10 und eine zweite Reibkupplung 30 auf. Die Reibkupplung 10 umfasst ein Lamellenpaket 11, welches aus Außenlamellen 12 und Innenlamellen 13 besteht. Die Außenlamellen 12 sind dabei drehfest, aber axial (parallel zur Rotationsachse 2) verschiebbar mit einem Außenlamellenträger 14 verbunden, welcher wiederum drehfest mit einem Kupplungsgehäuse 50 verbunden ist. Das Kupplungsgehäuse 50 ist drehbar um die Rotationsachse 2 gelagert und dient dazu, über die Außenverzahnung 51 Drehmoment des Antriebs in die Doppelkupplungsanordnung 1 zu leiten. Die Innenlamellen 13 sind ebenfalls in Umfangsrichtung fest und in axialer Richtung verschiebbar mit einem Innenlamellenträger 15 verbunden.

Radial innen liegend zum Lamellenpaket 11 der ersten Reibkupplung 10 ist ein Lamellenpaket 31 der zweiten Reibkupplung 30 angeordnet. Das Lamellenpaket 31 besteht aus Außenlamellen 32 und Innenlamellen 33. Drehfest und axial verschiebbar sind die Außenlamellen 32 mit einem Außenlamellenträger 34 verbunden, während die Innenlamellen 33 in gleicher Weise mit einem Innenlamellenträger 35 verbunden sind.

Erste Reibkupplung 10 und zweite Reibkupplung 30 sind mit ihren jeweiligen Lamellenpaketen 11, 31 in radialer Richtung verschachtelt angeordnet. Die erste Reibkupplung 10 liegt dabei radial außen, sie wird daher im Folgenden auch "äußere Reibkupplung" genannt. Entsprechend wird im Folgenden die zweite Reibkupplung 30 auch als "innere Reibkupplung" bezeichnet.

Nicht nur der Außenlamellenträger 14 der äußeren Reibkupplung 10, sondern auch der Innenlamellenträger 35 der inneren Reibkupplung 30 ist mit dem Kupplungsgehäuse 50 drehfest verbunden. Außenlamellenträger 14 und Innenlamellenträger 35 rotieren dabei also immer mit dem Kupplungsgehäuse 50. Nicht dargestellt ist, dass sich in radiale Richtung außen an dem Kupplungsgehäuse ein Rotor eine E-Maschine anschließen kann, welche dann die beiden Reibkupplungen 10, 30 umschließen würde. Mit der E-Maschine könnte das Kupplungsgehäuse alternativ oder zusätzlich zum Antrieb angetrieben werden.

Werden beispielsweise die Innenlamellen 13 und die Außenlamellen 12 gegen einen Anschlag 52 axial zusammengedrückt, baut die erste Reibkupplung 10 eine Drehmomentkapazität auf. Dadurch lässt sich ein Drehmoment von dem Antrieb auf die erste Eingangswelle 3 übertragen, wobei der Drehmomentfluss von dem Kupplungsgehäuse 50 und Außenlamellenträger 14 über das Lamellenpaket 11 auf den Innenlamellenträger 15 erfolgt. Der Innenlamellenträger 15 ist drehfest über einen ersten Kupplungstopf 16 und eine Kerbverzahnung 17 mit der ersten Eingangswelle 3 verbunden.

Analoges gilt für die zweite Reibkupplung 30: Werden die Lamellen 32, 33 axial gegen einen Anschlag 53 gedrückt, kann über einen zweiten Kupplungstopf 36 Drehmoment in die zweite Eingangswelle eingeleitet werden.

Die Beaufschlagung des Lamellenpakets 11 der äußeren Reibkupplung 10 mit einer axialen Druckkraft erfolgt durch eine Betätigungseinheit 70. Die Betätigungseinheit 70 weist einen axial verschiebbaren Kolben 71 auf, der mit einer axial feststehenden Druckraumbegrenzung 72 einen Druckraum 73 definiert. Wird im Druckraum 73 ein Öldruck aufgebaut, drückt der Kolben 71 über einen einstückig angeformten Andruckkörper 18 das Lamellenpaket 11 der äußeren Reibkupplung zusammen, wobei der Druckkraft des Kolbens 71 in Richtung einer Antriebsseite 5 wirkt.

Der Kolben 71 weist einen radialen Kolbenabschnitt 74 und einen zylindrischen Kolbenabschnitt 75 auf. An dem zylindrischen Kolbenabschnitt 75 schießt sich dann, einstückig angeformt, mit einem Radialabschnitt 19 der Andruckkörper 18 an. Zwischen einer Innenseite 76 des zylindrischen Kolbenabschnitts 75 und einer zylindrischen Außenseite 77 der Druckraumbegrenzung 72 ist eine Dichtung 78 angeordnet, welche an der Druckraumbegrenzung 72 anvulkanisiert ist.

Eine Abdichtung des Druckraums 73 zu einer mit dem Kupplungsgehäuse 50 rotierenden Kupplungsnabe 110 erfolgt über die Dichtungen 79, 80. Die Dichtung 80 ist dabei an einem inneren Ende 81 des Kolbens 71 angeordnet.

Wird der Druckraum 73 entlüftet, drückt eine Rückstellfeder 82 den Kolben 71 gegen einen Anschlag 83 der Druckraumbegrenzung 72. Entsprechend wird das Lamellenpaket 11 der äußeren Reibkupplung nicht mehr zusammengedrückt, sodass, abgesehen von einem Schleppmoment, kein Drehmoment mehr über die äußere Reibkupplung übertragen wird.

Zur Vermeidung von Fliehkrafteinflüssen weist die Betätigungseinheit 70 eine Ausgleichskammer 84 auf, in der die Rückstellfeder 82 untergebracht ist. Die Ausgleichskammer 84 wird einerseits begrenzt durch den Kolben 71 und andererseits durch einen Kupplungssteg 130, der die Kupplungsnabe 110 drehfest mit dem Innenlamellenträger 35 der inneren Kupplung 30 bzw. mit dem Kupplungsgehäuse 50 verbindet. Die Abdichtung der Ausgleichskammer 84 erfolgt über eine Dichtung 85, die zwischen einer Außenseite 86 des zylindrischen Kolbenabschnitts 75 und einem zylindrischen Stegabschnitt 131 des Kupplungsstegs 130 angeordnet ist.

Der Kupplungssteg 130, auf den später näher eingegangen wird, ist zu einer Spiegelachse 6 im Wesentlichen spiegelsymmetrisch aufgebaut. Bezogen auf diese Spiegelachse 6 bilden auch die erste Betätigungseinheit 70 und eine zweite Betätigungseinheit 90 ebenfalls eine Spiegelsymmetrie aus, sodass hinsichtlich der zweiten Betätigungseinheit 90 auf die detaillierte Beschreibung zur ersten Betätigungseinheit 70 verwiesen wird. Bauteile der Betätigungseinheit 90, welche zu Bauteilen der Betätigungseinheit 70 im Ausführungsbeispiel der Figur 1 identisch sind, werden mit um 20 erhöhte Bezugszeichen versehen.

Wie Figur 1 zu entnehmen ist, sind die Druckraumbegrenzungen 72, 92 der Betätigungseinheiten identisch aufgebaut. Dies trifft auch auf einen Absatz 107 bzw. 87 zu, der zur Anlage oder Aufnahme eines Seegerrings 111 zur axialen Abstützung der Druckraumbegrenzung 92 der zweiten Betätigungseinheit 90 dient. Bei der ersten Betätigungseinheit 70 hingegen hat dieser Absatz 87 keine Funktion, da sich hier die Druckraumbegrenzung an einem Pumpenrad 7 abstützt, das auf einem Absatz 112 der Kupplungsnabe 110 sitzt und fest mit ihr verbunden ist.

Es sei darauf hingewiesen, dass der Kolben 91 der zweiten Betätigungseinheit 90 in Richtung einer Getriebeseite 8 wirkt, also entgegen gesetzt zum Kolben 71 der ersten Betätigungseinheit 70. Auch ist darauf hinzuweisen, dass ein Andruckkörper 38 der zweiten Reibkupplung, welcher sich ebenfalls einstückig an dem Kolben 91 anformt, einen kürzeren Radialabschnitt 39 aufweist.

Wie oben bereits ausgeführt, ist der Kupplungssteg 130 zur Spiegelachse 6 spiegelsymmetrisch aufgebaut. Der Kupplungssteg 130 setzt sich zusammen aus zwei Steghälften 132, 133, die jeweils einen radialen Stegabschnitt 134, 135 aufweisen. Die Steghälfte 132 umfasst neben dem radialen Stegabschnitt 134 den bereits oben erwähnten zylindrischen Stegabschnitt 131. Die andere Steghälfte 135 weist noch einen zylindrischen Stegabschnitt 136 auf. Die zylindrischen Stegabschnitte 131, 136 sind nicht identisch, da der zylindrische Stegabschnitt 131 etwas länger ausgeführt ist als der zylindrische Stegabschnitt 136, um eine drehfeste Verbindung mit dem Kupplungsgehäuse 50 bilden zu können.

Zwischen den radialen Stegabschnitten 134, 135 ist ein Kanal 137 ausgebildet, durch den Öl von einer mittleren Ölbohrung bzw. von mehreren mittleren Ölbohrungen 113 der Kupplungsnabe 110 zwecks deren Kühlung zu den Reibkupplungen 10, 30 gelangen kann. Das Öl passiert dabei eine Weiche in Form eines Sinterring 138, der den Ölstrom durch die Ölbohrungen 113 in drei Teilströme aufteilt. Ein mittlerer Teilstrom führt in den Kanal 137. Die beiden anderen Teilströme werden durch den Sinterring 138 in die Ausgleichskammer 84 bzw. in die Ausgleichskammer 104 geleitet.

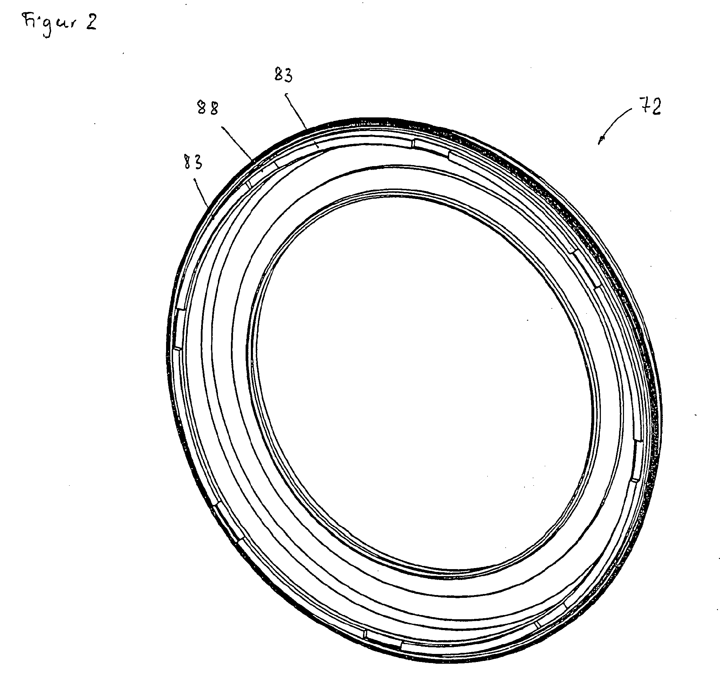

Figur 2 zeigt in perspektivischer Ansicht die Druckraumbegrenzung 72, wobei am Umfang in gleichen Abständen verteilt mehrere Anschläge 83 zu erkennen sind, gegen die die Rückstellfeder 82 den Kolben 71 drückt, wenn der Druckraum 73 drucklos gestellt wird. Zwischen zwei benachbarten Anschlägen 83 bildet sich ein Überströmkanal 88 aus, durch den sichergestellt wird, dass die Dichtung 78 nicht trocken läuft.

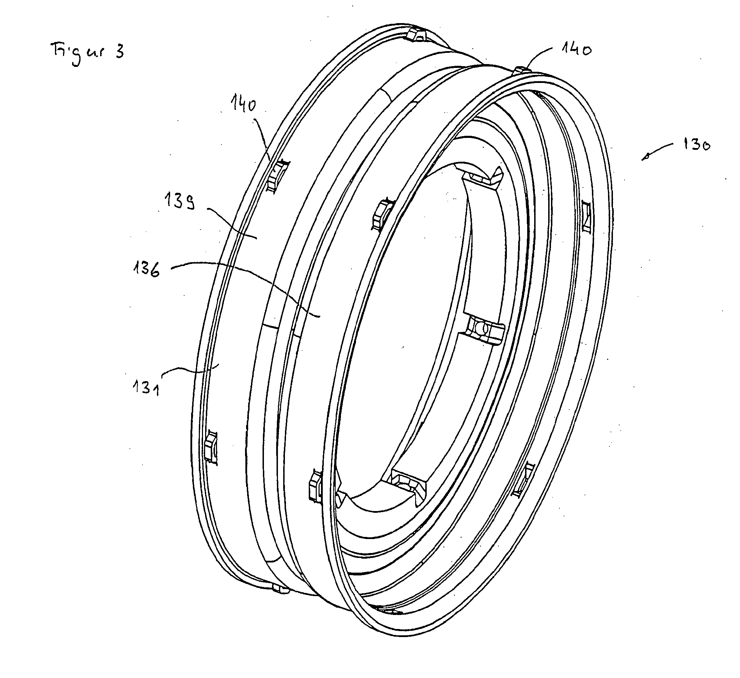

Figur 3 zeigt in perspektivischer Ansicht den Kupplungssteg 130, der an seinen zylindrischen Stegabschnitten 131, 136 an einer zylindrischen Außenfläche 139 nach außen gerichtete Ausstellungen 140 aufweist. Die Ausstellungen 140 sorgen für eine formschlüssige Verbindung zwischen Kupplungssteg 130 und Innenlamellenträger 35 der zweiten Reibkupplung 30 in Umfangsrichtung. Zudem sind die Weichen 138 zur Aufteilung in die Teilströme zur Kühlung der Reibkupplungen 10, 30 und zur Versorgung der Ausgleichskammern 84, 104 zu erkennen.

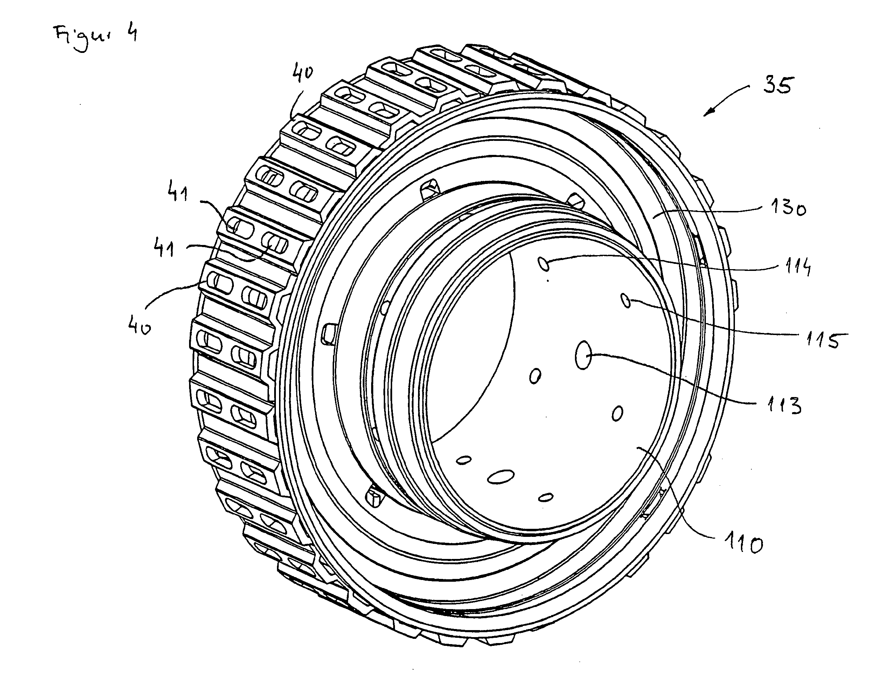

Figur 4 zeigt den Innenlammellenträger 35 mit dem Kupplungssteg 130 und der Kupplungsnabe 110. Der Innenlammellen 35 weist zahnähnliche Erhebungen 40 auf, die in entsprechende Aussparungen bei den Innenlamellen 33 der zweiten Reibkupplung 30 greifen. Jede Erhebung 40 weist zwei Durchgänge 41 auf, durch die der Teilstrom zur Kühlung der Reibkupplungen weiter radial nach außen fließen kann. Zu erkennen sind auch die Ölbohrungen in der der Kupplungsnabe 110. Es handelt sich um die mittleren Ölbohrungen 113, durch den Öl fließt, welches zu den Ausgleichskammern 84, 104 bzw. zu den Reibkupplungen 10, 30 gelangt. Durch die äußeren Bohrungen 114, 115 werden die Druckräume 73, 93 mit Öl versorgt.

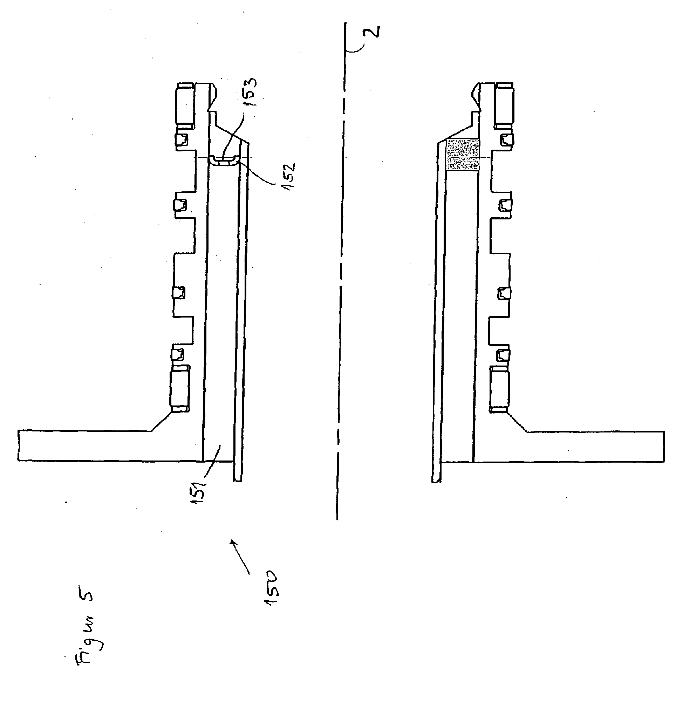

Figur 5 zeigt im Längsschnitt den feststehenden Kupplungssupport 150 mit einer axialen Bohrung 151, durch die Öl zu den Ölbohrungen 113, 114 und 115 der Kupplungsnabe 110 geleitet wird. Die axiale Bohrung 151 ist endseitig durch einen Stopfen 152 verschlossen, der jedoch eine kleine Leckageöffnung 153 aufweist, durch die die Kerbzahnverbindungen 17, 37 (siehe Figur 1) mit Öl versorgt werden können.

In den folgenden Figuren werden weitere Ausführungsbeispiele der Erfindung beschrieben, wobei im Wesentlichen nur auf die Unterschiede zu dem

Ausführungsbeispiel der Figur 1 hingewiesen wird. Bezüglich der Gemeinsamkeiten sei auf die Figurenbeschreibung der Figur 1 verwiesen.

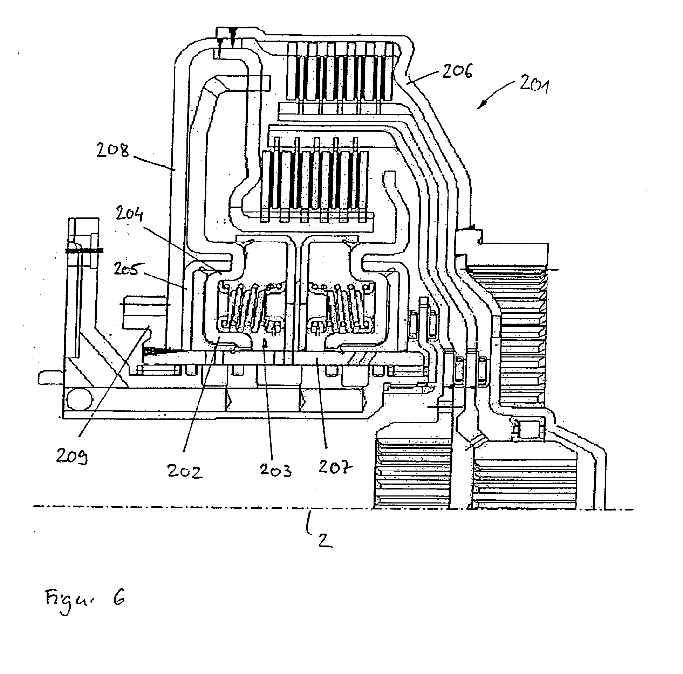

Figur 6 zeigt eine mit 201 bezeichnete Doppelkupplungsanordnung, bei der ein Kolben 202 einer ersten Betätigungseinheit 203 einen axialen Kolbenabschnitt 204 aufweist, der von einer Druckraumbegrenzung 205 in radialer Richtung von außen umgriffen wird. Die drehfeste Verbindung zwischen einem Kupplungsgehäuse 206 und einer Kupplungsnabe 207 erfolgt hier über einen radialen Gehäuseabschnitt 208, der in unmittelbarer Nähe eines Pumpenrads 209 auf die Kupplungsnabe 207 stößt.

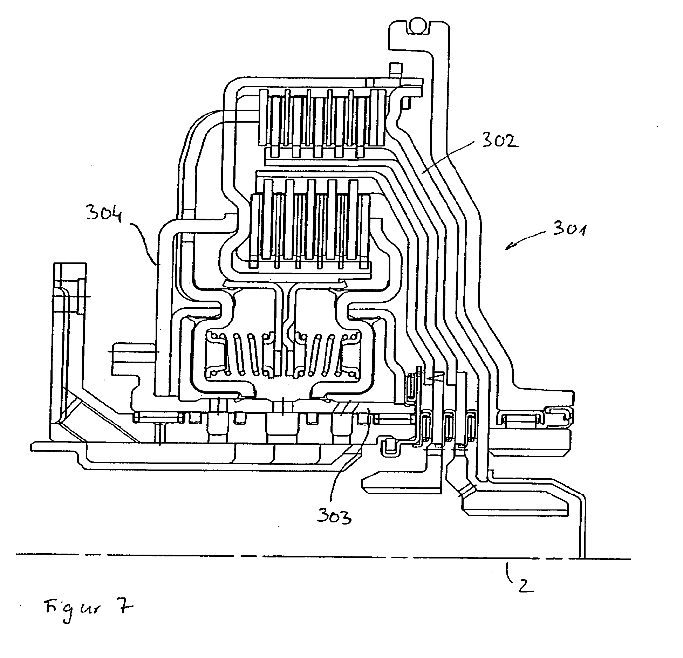

Figur 7 zeigt eine mit 301 bezeichnete Doppelkupplungsanordnung, bei der ebenfalls die drehfeste Verbindung zwischen Kupplungsgehäuse 302 und Kupplungsnabe 303 nicht, wie in Figur 1, über einen zentralen Kupplungssteg, sondern über einen radialen Gehäuseabschnitt 304 erfolgt.

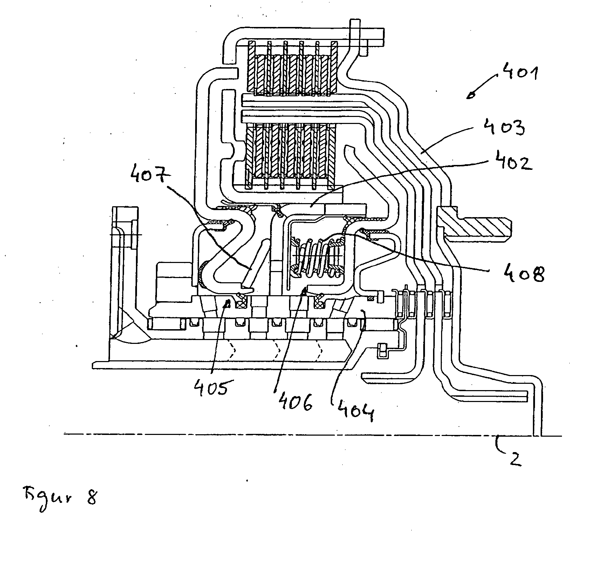

Figur 8 zeigt eine Doppelkupplungsanordnung 401, welche einen asymmetrischen Kupplungssteg 402 aufweist, durch den Drehmoment von einem Kupplungsgehäuse 403 auf eine Kupplungsnabe 404 übertragen wird. Aus der Asymmetrie des Kupplungsstegs 402 folgen zwei unterschiedlich aufgebaute Betätigungseinheiten 405, 406. Die Betätigungseinheit 405 weist zudem als Rückstellfeder eine Tellerfeder 407 auf, während die Betätigungseinheit 406 eine Schraubenfeder 408 einsetzt. Ein Pumpenrad 409 ist an der Kupplungsnabe 404 angeschweißt. Es wäre auch möglich, das Pumpenrad über eine Verzahnung drehfest mit der der Kupplungsnabe zu verbinden, wobei eine axiale Lagesicherung des Pumpenrads über einen Snap-Ring oder dergleichen erfolgen kann.

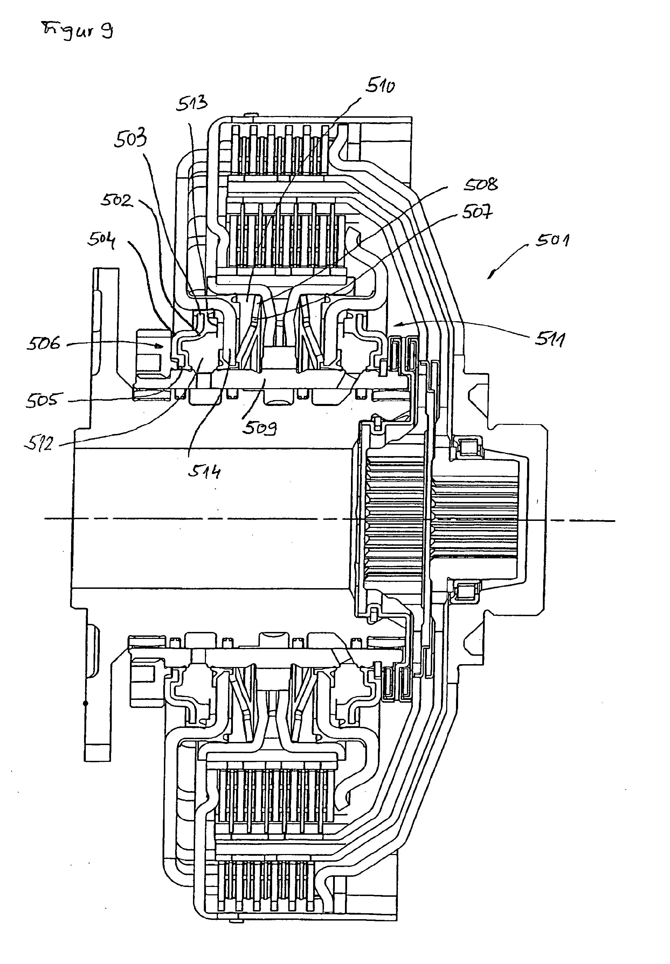

Figur 9, die im Gegensatz zu den Figuren 1, 5-8 einen nicht halbierten Längsschnitt eines weiteren Ausführungsbeispiels zeigt, ist eine Doppelkupplungsanordnung zu entnehmen, bei der sich eine Dichtung 502 (bevorzugt aus Gummi) von einem radial äußeren Ende 503 einer Druckraumbegrenzung 504 einer ersten Betätigungseinheit 506 durchgängig, und zwar bevorzugt an einer zum Druckraum 512 zugewandten Innenwand der Druckraumbegrenzung 504, zu einem radial inneren Ende 505 der Druckraumbegrenzung 504 erstreckt. Die Dichtung 502 bildet dabei auch einen Kolbenanschlag 513 aus, an dem ein Kolben 514 anliegt, wenn der Druckraum 512 drucklos gestellt ist. Kolbenanschlag 513 und/oder Kolben 514 sind dabei so beschaffen (beispielsweise durch Unterbrechungen oder Öffnungen in Umfangsrichtung), dass auch bei Anlage des Kolbens 514 an dem Kolbenanschlag 513 sich Öl im gesamten Druckraum 512 ausbreiten kann.

Zudem erkennt man in Figur 9 eine Öffnung 507 in einer Tellerfeder 508, damit von einer Kupplungsnabe 509 kommendes Öl sich nahezu ungehindert in einer Ausgleichskammer 510 verteilen kann. Hingewiesen wird hier auch auf die gegebene Symmetrie der ersten Betätigungseinheit 506 und einer zweiten Betätigungseinheit 511 mit identischen Bauteilen.

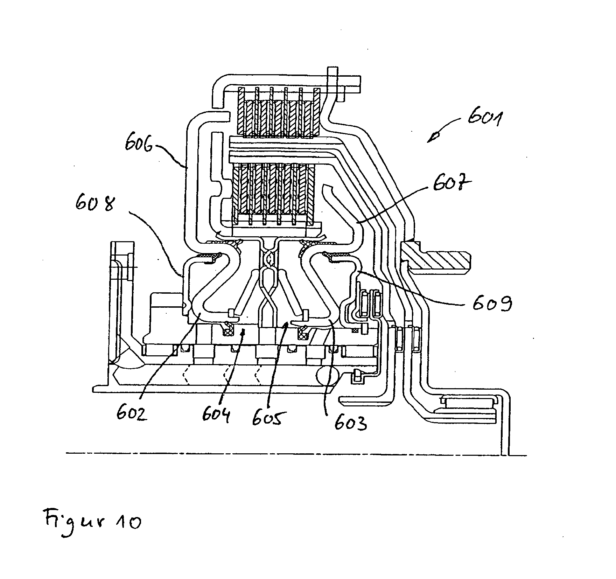

Figur 10 zeigt hingegen ein Ausführungsbeispiel 601, bei der die Kolben 602, 603 der beiden Betätigungseinheiten 604, 605, abgesehen von den unterschiedlichen Andruckkörpern 606, 607, nahezu identisch ausgebildet sind. Jedoch sind die Druckbegrenzungen 608, 609 der Betätigungseinheiten 604, 605 unterschiedlich ausgebildet.

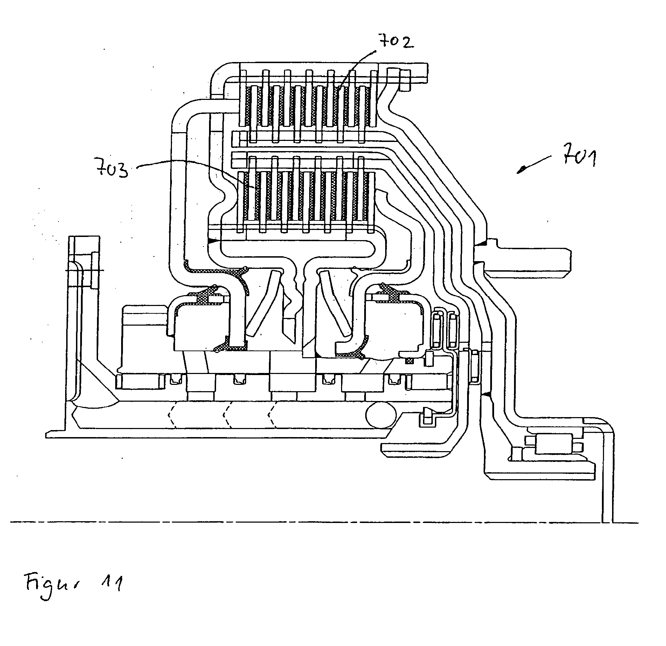

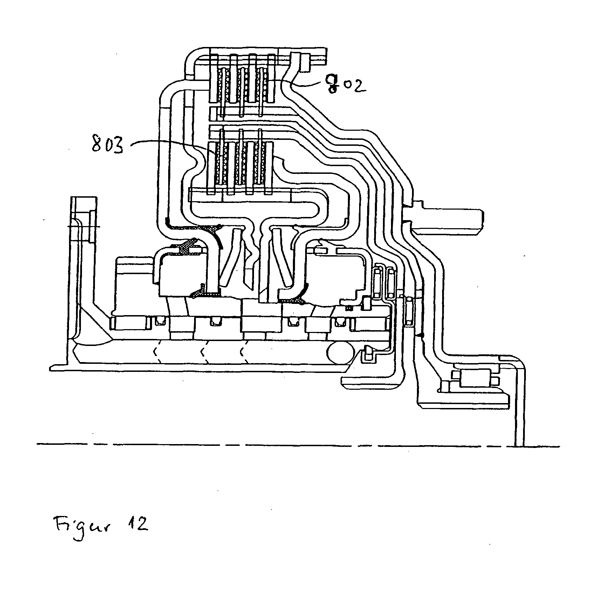

Doppelkupplungsanordnungen 701 und 801 der Figuren 11 und 12 unterscheiden sich in der Anzahl der Lammellen in den Lammellenpaketen 702, 703 bzw. 801, 802. Während die Doppelkupplungsanordnung 701 für die Übertragung größere Drehmomente ausgelegt ist, lässt sich mit der Doppelkupplungsanordnung 801 nur ein kleineres maximales Drehmoment übertragen.

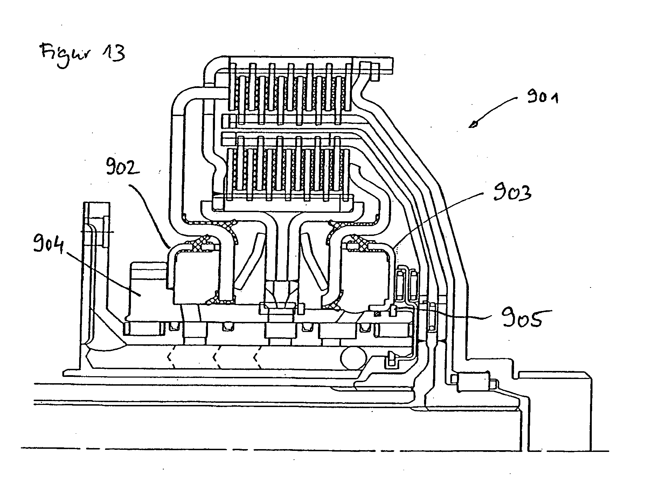

Die Doppelkupplungsanordnung 901 der Figur 13 unterscheidet sich von dem Ausführungsbeispiel der Figur 1 durch die unterschiedlich ausgebildeten Druckraumbegrenzungen 902, 903. Während im Ausführungsbeispiel der Figur 1 die beiden Druckraumbegrenzungen 72, 92 identisch ausgebildet sind, gibt es hier geringe Unterschiede, da sich die Druckraumbegrenzung 902 direkt am Pumpenrad 904 und die Druckraumbegrenzung 903, ähnlich wie in Figur 1, an einem Seegerring oder Schnappring 905 abstützt.

### Bezugszeichenliste:

- 1: Doppelkupplungsanordnung
- 2: Rotationsachse
- 3: erste Eingangswelle
- 4: zweite Eingangswelle (Hohlwelle)
- 5: Antriebsseite
- 6: Spiegelachse
- 7: Pumpenrad
- 8: Getriebeseite

- 10: Erste Reibkupplung
- 11: Lamellenpaket
- 12: Außenlamelle
- 13: Innenlamelle
- 14: Außenlamellenträger
- 15: Innenlameilenträger
- 16: erster Kupplungstopf
- 17: Kerbzahnverbindung
- 18: Andruckkörper
- 19: Radialabschnitt
- 20: Erhebung
- 21: Durchgang

- 30: zweite Reibkupplung
- 31: Lamellenpaket
- 32: Außenlamelle
- 33: Innenlamelle
- 34: Außenlamellenträger
- 35: Innenlamellenträger
- 36: zweiter Kupplungstopf
- 37: Kerbzahnverbindung
- 38: Andruckkörper
- 39: Radialabschnitt

- 50: Kupplungsgehäuse
- 51: Verzahnung
- 52: Anschlag
- 53: Anschlag

- 70: Erste Betätigungseinheit
- 71: Kolben
- 72: Druckraunbegrenzung
- 73: Druckraum
- 74: radialer Kolbenabschnitt
- 75: zylindrischer Kolbenabschnitt
- 76: Innenseite
- 77: Außenseite
- 78: Dichtung
- 79: Dichtung
- 80: Dichtung
- 81: inneres Ende
- 82: Rückstellfeder
- 83: Anschlag
- 84: Ausgleichskammer
- 85: Dichtung
- 86: Außenseite
- 87: Absatz
- 88: Überströmkanal

- 90: Zweite Betätigungseinheit

- 110: Kupplungsnabe
- 111: Seegerring/Schnappring
- 112: Absatz
- 113: mittlere Ölbohrung
- 114: äußere Ölbohrung
- 115: äußere Ölbohrung

- 130: Kupplungssteg
- 131: zylindrischer Stegabschnitt
- 132: Steghälfte
- 133: Steghälfte
- 134: radialer Stegabschnitt
- 135: radialer Stegabschnitt
- 136: zylindrischer Stegabschnitt
- 137: Kanal
- 138: Sinterring (Weiche)
- 139: Außenfläche
- 140: Ausstellung

- 150: Kupplungssuport
- 151: axiale Bohrung
- 152: Stopfen
- 153: Leckageöffnung

- 201: Doppelkupplungsanordnung
- 202: Kolben
- 203: Betätigungseinheit
- 204: axialer Kolbenabschnitt
- 205: Druckraumbegrenzung
- 206: Kupplungsgehäuse
- 207: Kupplungsnabe
- 208: Radialer Gehäuseabschnitt
- 209: Pumpenrad

- 301: Doppelkupplungsanordnung
- 302: Kupplungsgehäuse
- 303: Kupplungsnabe
- 304: Radialer Gehäuseabschnitt

- 401: Doppelkupplungsanordnung
- 402: Kupplungssteg
- 403: Kupplungsgehäuse
- 404: Kupplungsnabe
- 405: Betätigungseinheit
- 406: Betätigungseinheit
- 407: Tellerfeder
- 408: Schraubenfeder

- 501: Doppelkupplungsanordnung
- 502: Betätigungseinheit
- 503: inneres Ende
- 504: Druckraumbegrenzung
- 505: äußeres Ende
- 506: erste Betätigungseinheit
- 507: Öffnung
- 508: Tellerfeder
- 509: Kupplungsnabe
- 510: Ausgleichskammer
- 511: zweite Betätigungseinheit
- 512: Druckraum
- 513: Kolbenanschlag
- 514: Kolben

- 601: Doppelkupplungsanordnung
- 602: Kolben
- 603: Kolben
- 604: Betätigungseinheit
- 605: Betätigungseinheit
- 606: Andruckkörper
- 607: Andruckkörper
- 608: Druckraumbegrenzung
- 609: Druckraumbegrenzung

- 701: Doppelkupplungsanordnung
- 702: Lamellenpaket
- 703: Lamellenpaket

- 801: Doppelkupplungsanordnung
- 802: Lamellenpaket
- 803: Lamellenpaket

- 901: Doppelkupplungsanordnung
- 902: Druckraumbegrenzung
- 903: Druckraumbegrenzung
- 904: Pumpenrad
- 905: Seegerring/Schnappring

## Patentansprüche

1. Doppelkupplungsanordnung (1, 201, 301, 401, 501, 601, 701, 801, 901) für ein eine erste Eingangswelle (3) und eine zweite Eingangswelle (4) aufweisendes Getriebe,
- mit einem mit einem Antrieb drehfest verbindbaren Kupplungsgehäuse (50),
- mit einer äußeren Reibkupplung (10), welche ein Drehmoment zwischen Kupplungsgehäuse (50) und erster Eingangswelle (3) überträgt, wenn sie mit einer Druckkraft beaufschlagt wird;
- mit einer inneren Reibkupplung (30), welche ein Drehmoment Zwischen Kupplungsgehäuse (50) und zweiter Eingangswelle (4) überträgt, wenn sie mit einer Druckkraft beaufschlagt wird, wobei die äußere Reibkupplung (10) und die innere Reibkupplung (30) in radialer Richtung verschachtelt angeordnet sind;
- mit einer ersten Betätigungseinheit (70), welche einen axial Verschiebbaren und mit dem Kupplungsgehäuse (50) rotierenden Kolben (71) aufweist, welcher bei Betätigung der ersten Betätigungseinheit (70) eine Druckkraft auf die äußere ReibKupplung (10) ausübt;
- mit einer zweiten Betätigungseinheit (90), welche einen axial Verschiebbaren und mit dem Kupplungsgehäuse rotierenden Kolben aufweist, welche bei Betätigung der zweiten Betätigungseinheit (90) eine Druckkraft auf die innere ReibKupplung (30) ausübt,
wobei die Druckkraft des Kolbens (71) der ersten Betätigungseinheit (70) und die Druckkraft des Kolbens der zweiten Betätigungseinheit (90) in axial entgegen gesetzten Richtungen wirken, **dadurch gekennzeichnet, dass** ein Kupplungssupport (150) vorgesehen ist, der wenigstens eine Ölbohrung (151) und wenigstens einen Stopfen (152) zum Verschluss einer Ölbohrung aufweist, wobei der Stopfen (152) eine definierte Leckageöffnung (153) aufweist.

2. Doppelkupplungsanordnung (1, 201, 301, 401, 501, 601, 701, 801, 901) nach Anspruch 1, **dadurch gekennzeichnet, dass** die äußere Reibkupplung (10) ein Lamellenpaket (11) mit Außenlamellen (12) und Innenlamellen (13) und die innere Reibkupplung (30) ein Lamellenpaket (31) mit Außenlamellen (32) und Innenlamellen (33) aufweisen, wobei die Außenlamellen (12) der äußeren Reibkupplung (10) und die Innenlamellen (33) der inneren Reibkupplung (30) drehfest mit dem Kupplungsgehäuse (50) verbunden sind.

3. Doppelkupplungsanordnung (1, 201, 301, 401, 501, 601, 701, 801, 901) nach Anspruch 1 oder 2, **dadurch gekennzeichnet, dass** die erste Betätigungseinheit (70) und die zweite Betätigungseinheit (90) im Wesentlichen spiegelsymmetrisch zu einer senkrecht zu einer Rotationsachse (2) verlaufenden Symmetrieachse (6) aufgebaut sind und in radialer Richtung gesehen innerhalb der inneren Reibkupplung (30) angeordnet sind.

4. Doppelkupplungsanordnung (1, 201, 301, 401, 501, 601, 701, 801, 901) nach einem der Ansprüche 1 bis 3, **dadurch gekennzeichnet, dass** der Kolben (71) der ersten Betätigungseinheit (70) mit einem radial innen liegenden Ende (81) verschiebbar an einer mit dem Kupplungsgehäuse rotierenden Kupplungsnabe (110) anliegt.

5. Doppelkupplungsanordnung (1, 201, 301, 401, 501, 601, 701, 801, 901) nach einem der Ansprüche 1 bis 4, **dadurch gekennzeichnet, dass** der Kolben (71) der ersten Betätigungseinrichtung (70) einen radialen Kolbenabschnitt (74) und einen axialen oder zylindrischen Kolbenabschnitt (75) aufweisen, wobei zwischen einer Innenseite (76) des zylindrischen Kolbenabschnitts (75) und einer Außenseite (77) einer Druckraumbegrenzung (72) der ersten Betätigungseinheit (70) eine Dichtung (78) zur Abdichtung eines Druckraums (73) vorgesehen ist.

6. Doppelkupplungsanordnung (1, 201, 301, 401, 501, 601, 701, 801, 901) nach einem der Ansprüche 1 bis 5, **dadurch gekennzeichnet, dass** ein Kupplungssteg (130) eine Kupplungsnabe (110) mit einem Innenlamellenträger (35) der inneren Reibkupplung (30) verbindet, wobei der Kupplungssteg (130) einen radialen Stegabschnitt (134, 135) und wenigstens einen zylindrischen Stegabschnitt (131, 136) aufweist.

7. Doppelkupplungsanordnung (1, 201, 301, 401, 501, 601, 701, 801, 901) nach Anspruch 6, **dadurch gekennzeichnet, dass** zwischen einer Innenseite des zylindrischen Stegabschnitts (131, 136) des KupplungsStegs (130) und einer Außenseite (86) des zylindrischen Kolbenabschnitts (75) des Kolbens (71) der ersten Betätigungseinrichtung (70) eine Dichtung (85) zur Abdichtung einer Ausgleichskammer (84) der ersten Betätigungseinheit (70) vorgesehen ist.

8. Doppelkupplungsanordnung (1, 201, 301, 401, 501, 601, 701, 801, 901) nach Anspruch 6 oder 7, **dadurch gekennzeichnet, dass** der Kupplungssteg (130) eine Weiche (138) umfasst, die einen Ölstrom in einem Teilstrom zur Kühlung wenigstens einer Reibkupplung und in wenigstens einen Teilstrom zur Ausgleichskammer der ersten Betätigungseinheit aufteilt.

9. Doppelkupplungsanordnung (1, 201, 301, 401, 501, 601, 701, 801, 901) nach Anspruch 8, **dadurch gekennzeichnet, dass** der Teilstrom zur Kühlung wenigstens einer Reibkupplung durch einen Hohlraum des Kupplungsstegs (130) führbar ist.

10. Doppelkupplungsanordnung (1, 201, 301, 401, 501, 601, 701, 801, 901) nach einem der Ansprüche 1 bis 9, **dadurch gekennzeichnet, dass** die Druckkraft des Kolbens (71) der ersten Betätigungseinheit (70) durch einen Andruckkörper (18) auf das Lamellenpaket (11) der ersten
Reibkupplung (10) übertragen wird.

11. Doppelkupplungsanordnung (1, 201, 301, 401, 501, 601, 701, 801, 901) nach Anspruch 10, **dadurch gekennzeichnet, dass** der Andruckkörper (18) einstückig an dem Kolben (71) angeformt ist.

12. Doppelkupplungsanordnung (1, 201, 301, 401, 501, 601, 701, 801, 901) nach einem der Ansprüche 1 bis 11, **dadurch gekennzeichnet, dass** der Kolben (71) der ersten Betätigungseinheit (70) und ein Kolben der zweiten Betätigungseinheit (90) baugleich sind.

13. Doppelkupplungsanordnung (1, 201, 301, 401, 501, 601, 701, 801, 901) nach einem der Ansprüche 1 bis 12, **dadurch gekennzeichnet, dass** die Druckraumbegrenzung (72) der ersten Betätigungseinheit (70) und eine Druckraumbegrenzung der zweiten Betätigungseinheit (90) baugleich sind.

14. Doppelkupplungsanordnung (1, 201, 301, 401, 501, 601, 701, 801, 901) nach einem der Ansprüche 1 bis 13, **dadurch gekennzeichnet, dass** die Ausgleichskammer (84) der ersten Betätigungseinheit (70) mit einer Ausgleichskammer der zweiten Betätigungseinheit (90) gleich ausgebildet sind.

15. Doppelkupplungsanordnung (1, 201, 301, 401, 501, 601, 701, 801, 901) nach einem der Ansprüche 1 bis 14, **dadurch gekennzeichnet, dass** die Kupplungsnabe (110) wenigstens eine Ölbohrung aufweist, welche in eine Ölnut mit abgerundeten oder gefasten Nutwänden mündet.

16. Doppelkupplungsanordnung (1, 201, 301, 401, 501, 601, 701, 801, 901) nach einem der Ansprüche 1 bis 15, **dadurch gekennzeichnet, dass** die Kupplungsnabe (110) an einem dem Antrieb abgewandten Ende einen Absatz (112) zur drehfesten Aufnahme eines Pumpenrads (7) aufweist.

## Claims

1. Dual-clutch arrangement (1, 201, 301, 401, 501, 601, 701, 801, 901) for a transmission which has a first input shaft (3) and a second input shaft (4),
- having a clutch housing (50) which can be connected rotationally conjointly to a drive input,
- having an outer friction clutch (10) which transmits a torque between the clutch housing (50) and first input shaft (3) when subjected to a pressure force;
- having an inner friction clutch (30) which transmits a torque between the clutch housing (50) and second input shaft (4) when subjected to a pressure force, wherein the outer friction clutch (10) and the inner friction clutch (30) are arranged in nested fashion in a radial direction;
- having a first actuation unit (70) which has an axially displaceable piston (71) which rotates with the clutch housing (50), which piston exerts a pressure force on the outer friction clutch (10) when the first actuation unit (70) is actuated;
- having a second actuation unit (90) which has an axially displaceable piston which rotates with the clutch housing, which piston exerts a pressure force on the inner friction clutch (30) when the second actuation unit (90) is actuated,
wherein the pressure force of the piston (71) of the first actuation unit (70) and the pressure force of the piston of the second actuation unit (90) act in axially opposite directions, **characterized in that** a clutch support (150) is provided which has at least one oil bore (151) and at least one plug (152) for closing off an oil bore, wherein the plug (152) has a defined leakage opening (153).

2. Dual-clutch arrangement (1, 201, 301, 401, 501, 601, 701, 801, 901) according to Claim 1, **characterized in that** the outer friction clutch (10) has a plate pack (11) with outer plates (12) and inner plates (13), and the inner friction clutch (30) has a plate pack (31) with outer plates (32) and inner plates (33), wherein the outer plates (12) of the outer friction clutch (10) and the inner plates (33) of the inner friction clutch (30) are connected rotationally conjointly to the clutch housing (50).

3. Dual-clutch arrangement (1, 201, 301, 401, 501, 601, 701, 801, 901) according to Claim 1 or 2, **characterized in that** the first actuation unit (70) and the second actuation unit (90) are constructed substantially mirror-symmetrically with respect to an axis of symmetry (6) running perpendicular to an axis of rotation (2) and are arranged within the inner friction clutch (30) as viewed in a radial direction.

4. Dual-clutch arrangement (1, 201, 301, 401, 501, 601, 701, 801, 901) according to one of Claims 1 to 3, **characterized in that** the piston (71) of the first actuation unit (70) bears, by way of a radially inner end (81), in a displaceable manner against a clutch hub (110) which rotates with the clutch housing.

5. Dual-clutch arrangement (1, 201, 301, 401, 501, 601, 701, 801, 901) according to one of Claims 1 to 4, **characterized in that** the piston (71) of the first actuation unit (70) has a radial piston section (74) and an axial or cylindrical piston section (75), wherein, between an inner side (76) of the cylindrical piston section (75) and an outer side (77) of a pressure chamber delimitation (72) of the first actuation unit (70), there is provided a seal (78) for sealing off a pressure chamber (73).

6. Dual-clutch arrangement (1, 201, 301, 401, 501, 601, 701, 801, 901) according to one of Claims 1 to 5, **characterized in that** a clutch web (130) connects a clutch hub (110) to an inner plate carrier (35) of the inner friction clutch (30), wherein the clutch web (130) has a radial web section (134, 135) and at least one cylindrical web section (131, 136).

7. Dual-clutch arrangement (1, 201, 301, 401, 501, 601, 701, 801, 901) according to Claim 6, **characterized in that**, between an inner side of the cylindrical web section (131, 136) of the clutch web (130) and an outer side (86) of the cylindrical piston section (75) of the piston (71) of the first actuation unit (70), there is provided a seal (85) for sealing off a compensation chamber (84) of the first actuation unit (70).

8. Dual-clutch arrangement (1, 201, 301, 401, 501, 601, 701, 801, 901) according to Claim 6 or 7, **characterized in that** the clutch web (130) comprises a distributing guide (138) which splits an oil stream into a partial stream for cooling at least one friction clutch and at least one partial stream to the compensation chamber of the first actuation unit.

9. Dual-clutch arrangement (1, 201, 301, 401, 501, 601, 701, 801, 901) according to Claim 8, **characterized in that** the partial stream for cooling at least one friction clutch can be conducted through a cavity of the clutch web (130).

10. Dual-clutch arrangement (1, 201, 301, 401, 501, 601, 701, 801, 901) according to one of Claims 1 to 9, **characterized in that** the pressure force of the piston (71) of the first actuation unit (70) is transmitted to the plate pack (11) of the first friction clutch (10) by a pressure-exerting body (18).

11. Dual-clutch arrangement (1, 201, 301, 401, 501, 601, 701, 801, 901) according to Claim 10, **characterized in that** the pressure-exerting body (18) is formed integrally on the piston (71).

12. Dual-clutch arrangement (1, 201, 301, 401, 501, 601, 701, 801, 901) according to one of Claims 1 to 11, **characterized in that** the piston (71) of the first actuation unit (70) and a piston of the second actuation unit (90) are structurally identical.

13. Dual-clutch arrangement (1, 201, 301, 401, 501, 601, 701, 801, 901) according to one of Claims 1 to 12, **characterized in that** the pressure chamber delimitation (72) of the first actuation unit (70) and a pressure chamber delimitation of the second actuation unit (90) are structurally identical.

14. Dual-clutch arrangement (1, 201, 301, 401, 501, 601, 701, 801, 901) according to one of Claims 1 to 13, **characterized in that** the compensation chamber (84) of the first actuation unit (70) is of identical form to a compensation chamber of the second actuation unit (90).

15. Dual-clutch arrangement (1, 201, 301, 401, 501, 601, 701, 801, 901) according to one of Claims 1 to 14, **characterized in that** the clutch hub (110) has at least one oil bore which issues into an oil groove with rounded or chamfered groove walls.

16. Dual-clutch arrangement (1, 201, 301, 401, 501, 601, 701, 801, 901) according to one of Claims 1 to 15, **characterized in that** the clutch hub (110) has, on an end facing away from the drive input, a shoulder (112) for rotationally conjointly receiving a pump wheel (7).

## Revendications

1. Ensemble à double embrayage (1, 201, 301, 401, 501, 601, 701, 801, 901) pour une transmission présentant un premier arbre d'entrée (3) et un deuxième arbre d'entrée (4), comprenant
- un boîtier d'embrayage (50) pouvant être connecté de manière solidaire en rotation à un entraînement,
- un embrayage à friction extérieur (10), qui transmet un couple entre le boîtier d'embrayage (50) et le premier arbre d'entrée (3), lorsqu'il est sollicité par une force de pression ;
- un embrayage à friction intérieur (30) qui transmet un couple entre le boîtier d'embrayage (50) et le deuxième arbre d'entrée (4) lorsqu'il est sollicité par une force de pression, l'embrayage à friction extérieur (10) et l'embrayage à friction intérieur (30) étant disposés de manière emboîtée dans la direction radiale ;
- une première unité d'actionnement (70) qui présente un piston (71) déplaçable axialement et tournant avec le boîtier d'embrayage (50), lequel piston exerce une force de pression sur l'embrayage à friction extérieur (10) lors de l'actionnement de la première unité d'actionnement (70) ;
- une deuxième unité d'actionnement (90), qui présente un piston déplaçable axialement et tournant avec le boîtier d'embrayage, lequel piston exerce une force de pression sur l'embrayage à friction intérieur (30) lors de l'actionnement de la deuxième unité d'actionnement (90),
la force de pression du piston (71) de la première unité d'actionnement (70) et la force de pression du piston de la deuxième unité d'actionnement (90) agissant dans des directions axialement opposées, **caractérisé en ce qu'**un support d'embrayage (150) est prévu, lequel présente au moins un alésage d'huile (151) et au moins un bouchon (152) pour fermer un alésage d'huile, le bouchon (152) présentant une ouverture de fuite définie (153).

2. Ensemble à double embrayage (1, 201, 301, 401, 501, 601, 701, 801, 901) selon la revendication 1, **caractérisé en ce que** l'embrayage à friction extérieur (10) présente un paquet de disques (11) avec des disques extérieurs (12) et des disques intérieurs (13) et l'embrayage à friction intérieur (30) présente un paquet de disques (31) avec des disques extérieurs (32) et des disques intérieurs (33), les disques extérieurs (12) de l'embrayage à friction extérieur (10) et les disques intérieurs (33) de l'embrayage à friction intérieur (30) étant connectés de manière solidaire en rotation au boîtier d'embrayage (50).

3. Ensemble à double embrayage (1, 201, 301, 401, 501, 601, 701, 801, 901) selon la revendication 1 ou 2, **caractérisé en ce que** la première unité d'actionnement (70) et la deuxième unité d'actionnement (90) sont montées essentiellement avec une symétrie spéculaire par rapport à un axe de symétrie (6) s'étendant perpendiculairement par rapport à un axe de rotation (2) et sont disposées, vu dans la direction radiale, à l'intérieur de l'embrayage à friction intérieur (30).

4. Ensemble à double embrayage (1, 201, 301, 401, 501, 601, 701, 801, 901) selon l'une quelconque des revendications 1 à 3, **caractérisé en ce que** le piston (71) de la première unité d'actionnement (70) s'applique avec une extrémité radialement intérieure (81) de manière déplaçable contre un moyeu d'embrayage (110) tournant avec le boîtier d'embrayage.

5. Ensemble à double embrayage (1, 201, 301, 401, 501, 601, 701, 801, 901) selon l'une quelconque des revendications 1 à 4, **caractérisé en ce que** le piston (71) du premier dispositif d'actionnement (70) présente une portion de piston radiale (74) et une portion de piston axiale ou cylindrique (75), un joint d'étanchéité (78) étant prévu entre un côté intérieur (76) de la portion de piston cylindrique (75) et un côté extérieur (77) d'une limitation d'espace de pression (72) de la première unité d'actionnement (70) afin de réaliser l'étanchéité d'un espace de pression (73).

6. Ensemble à double embrayage (1, 201, 301, 401, 501, 601, 701, 801, 901) selon l'une quelconque des revendications 1 à 5, **caractérisé en ce qu'**une bande d'embrayage (130) relie un moyeu d'embrayage (110) à un support de disques internes (35) de l'embrayage à friction intérieur (30), la bande d'embrayage (130) présentant une portion de bande radiale (134, 135) et au moins une portion de bande cylindrique (131, 136).

7. Ensemble à double embrayage (1, 201, 301, 401, 501, 601, 701, 801, 901) selon la revendication 6, **caractérisé en ce qu'**entre un côté intérieur de la portion de bande cylindrique (131, 136) de la bande d'embrayage (130) et un côté extérieur (86) de la portion de piston cylindrique (75) du piston (71) du premier dispositif d'actionnement (70), est prévu un joint d'étanchéité (85) pour réaliser l'étanchéité d'une chambre de compensation (84) de la première unité d'actionnement (70).

8. Ensemble à double embrayage (1, 201, 301, 401, 501, 601, 701, 801, 901) selon la revendication 6 ou 7, **caractérisé en ce que** la bande d'embrayage (130) comprend un dispositif de séparation (138) qui divise un flux d'huile en un flux partiel pour refroidir au moins un embrayage à friction et en au moins un flux partiel allant vers la chambre de compensation de la première unité d'actionnement.

9. Ensemble à double embrayage (1, 201, 301, 401, 501, 601, 701, 801, 901) selon la revendication 8, **caractérisé en ce que** le flux partiel pour le refroidissement d'au moins un embrayage à friction peut être guidé à travers une cavité de la bande d'embrayage (130).

10. Ensemble à double embrayage (1, 201, 301, 401, 501, 601, 701, 801, 901) selon l'une quelconque des revendications 1 à 9, **caractérisé en ce que** la force de pression du piston (71) de la première unité d'actionnement (70) est transmise par un corps d'application de pression (18) sur le paquet de disques (11) du premier embrayage à friction (10).

11. Ensemble à double embrayage (1, 201, 301, 401, 501, 601, 701, 801, 901) selon la revendication 10, **caractérisé en ce que** le corps d'application de pression (18) est façonné d'une seule pièce sur le piston (71).

12. Ensemble à double embrayage (1, 201, 301, 401, 501, 601, 701, 801, 901) selon l'une quelconque des revendications 1 à 11, **caractérisé en ce que** le piston (71) de la première unité d'actionnement (70) et un piston de la deuxième unité d'actionnement (90) sont de construction identique.

13. Ensemble à double embrayage (1, 201, 301, 401, 501, 601, 701, 801, 901) selon l'une quelconque des revendications 1 à 12, **caractérisé en ce que** la limitation d'espace de pression (72) de la première unité d'actionnement (70) et une limitation d'espace de pression de la deuxième unité d'actionnement (90) sont de construction identique.

14. Ensemble à double embrayage (1, 201, 301, 401, 501, 601, 701, 801, 901) selon l'une quelconque des revendications 1 à 13, **caractérisé en ce que** la chambre de compensation (84) de la première unité d'actionnement (70) est réalisée de manière identique à une chambre de compensation de la deuxième unité d'actionnement (90).

15. Ensemble à double embrayage (1, 201, 301, 401, 501, 601, 701, 801, 901) selon l'une quelconque des revendications 1 à 14, **caractérisé en ce que** le moyeu d'embrayage (110) présente au moins un alésage d'huile qui débouche dans une rainure d'huile ayant des parois de rainure arrondies ou biseautées.

16. Ensemble à double embrayage (1, 201, 301, 401, 501, 601, 701, 801, 901) selon l'une quelconque des revendications 1 à 15, **caractérisé en ce que** le moyeu d'embrayage (110) présente, au niveau d'une extrémité opposée à l'entraînement, un épaulement (112) pour recevoir de manière solidaire en rotation une roue de pompe (7).
